# EUROPEAN PATENT SPECIFICATION

(11) **EP 1 425 673 B1**
(45) Date of publication and mention of the grant of the patent: **12.04.2006**
(21) Application number: 02777772.1
(22) Date of filing: 26.08.2002
(51) Int. Cl.: G06F 13/28

(54) **METHOD OF TRANSFERRING DATA IN AN ELECTRONIC CIRCUIT, ELECTRONIC CIRCUIT AND RELATING DEVICE**
VERFAHREN ZUM TRANSFERIEREN VON DATEN IN EINER ELEKTRONISCHEN SCHALTUNG, ELEKTRONISCHE SCHALTUNG UND ZUSAMMENHANGEINRICHTUNG
PROCEDE DE TRANSFERT DE DONNEES DANS UN CIRCUIT ELECTRONIQUE, CIRCUIT ELECTRONIQUE ET DISPOSITIF CONNEXE

(30) Priority: 30.08.2001 IT TO20010838
(43) Date of publication of application: 09.06.2004
(73) Proprietor: Telecom Italia S.p.A., 20123 Milano (IT)
(72) Inventor: BRAGAGNINI, Andrea, Telecom Italia S.p.A, I-10148 Torino (IT); GARINO, Pierangelo, Telecom Italia S.p.A., I-10148 (IT); TUROLLA, Maura, Telecom Italia S.P.A., I-10148 Torino (IT); VARRIALE, Antonio, Telecom Italia S.p.A., I-10148 Torino (IT)
(74) Representative: Giannesi, Pier Giovanni
(86) International application number: PCT/IT2002/000549
(87) International publication number: WO 2003/019395

(56) References cited:
- US-A- 5 175 818
- US-A- 5 584 010
- US-A- 6 119 176

## Description

### Technical Field

The present invention concerns a method of transferring data in an electronic circuit, incorporating a control unit (CPU), a first circuit block having storage means and a second circuit block capable of exchanging data with said first circuit block.

The present invention also concerns an electronic circuit and a device, designed to implement the method according to the invention.

In particular, the present invention concerns test subsystems capable for instance of implementing and emulating transmission and reception chains in which circuit blocks implemented in the form of hardware blocks and/or in the form of firmware blocks co-exist, and in which the test procedure consists of selectively activating the functions of the blocks forming the chain and monitoring for instance the data transfer from one block to the other through the RAM.

### Background Art

As is well known, the data exchange between hardware and/or firmware circuit blocks, capable of performing specific processing functions, heavily engages the CPU, in particular within the test or emulation subsystems of electronic circuits.

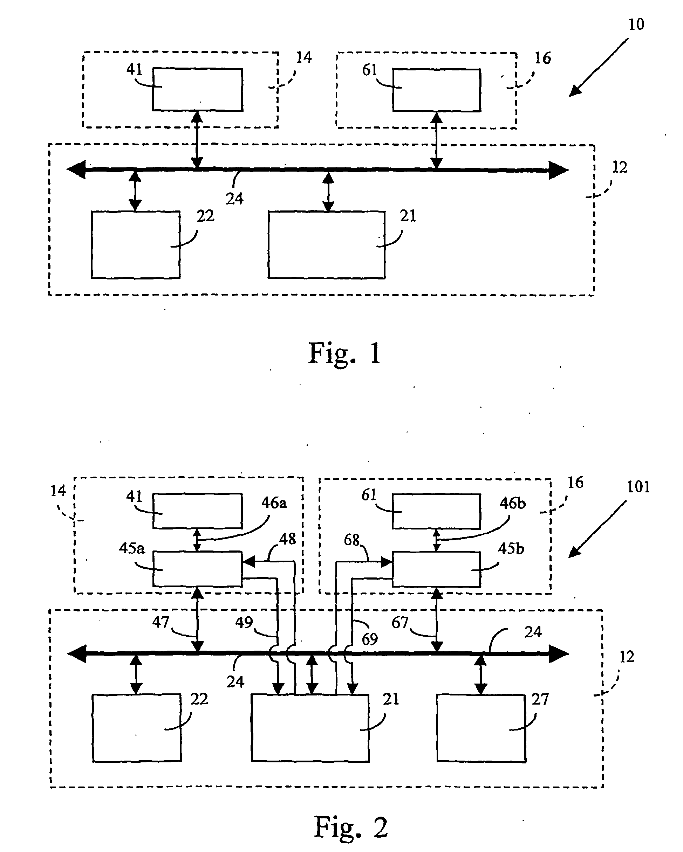

Let us consider by way of example the logic diagram of Figure 1, relating to an emulation or test subsystem 10, of a known type, for instance, the emulation subsystem model ARM INTEGRATOR/AP by ARM Corp., designed for the behaviour emulation of a circuit formed by a plurality of hardware and /or firmware blocks.
Said subsystem 10 incorporates in one of its possible configurations a basic board 12, a first module 14, in which at least one programmable logic circuit of FPGA (Field Programmable Gate Array) type, 41, can be housed, and a second module 16, in which at least one microprocessor of DSP (Digital Signal Processor) type, 61, can be housed.
Basic board 12 of said subsystem 10 incorporates a control microprocessor (CPU) 21, for instance of the ARM7TDMI type, a random access memory (RAM) 22 and a channel for addresses, controls and data (BUS) 24. To BUS 24 there are connected, in a known way, the CPU 21, the RAM 22, the PFGA 41 and the DSP microprocessor 61.
As generally known, during the emulation phases the data transfer from a hardware block, which is emulated for instance by means of the logic circuit PFGA 41, and a firmware block, emulated for instance by means of the DSP 61, is performed in the following way:
- once logic circuit FPGA 41 has carried out the processing functions implemented in the same PFGA 41 and has informed CPU 21 of the completion of said operation, CPU 21 starts checking step by step the transfer to RAM 22 of the data processed by PFGA 41, through
   - access to BUS 24 to read the processed data from logic circuit FPGA 41;
   - access to BUS 24 to write the data just read into RAM 22 ; and
- upon completion of the transfer to RAM 22, CPU 21 reads the data from RAM 22 and transfers them to DSP 61 through:
   - access to BUS 24 to read the previously stored data from RAM 22; and
   - access to BUS 24 to write the data just read into DSP 61.
Obviously, the transfer process from DSP 61 to FPGA 41 is substantially similar, but in the inverse direction.

A first technical problem in the background technique is due to the fact that by each transfer from FPGA (hardware block) 41 or from DSP (firmware block) 61, and vice-versa, BUS 24 is engaged twice and that by each transfer from hardware block 41 to firmware block 61, or vice-versa, BUS 24 is engaged four times, thus causing the overloading of BUS 24, in particular in the cases in which the subsystem 10 is required to emulate for instance a transmission chain in real time.

A second problem of the state of the art lies in the fact that, during any transfer of data, CPU 21 is required to manage and monitor the data transfer step by step, and all this prevents CPU 21 from carrying out additional processing functions required for the emulation of the electronic circuit to be tested.

Owing to the issues of the state of the art set out above, it is often necessary to increase the characteristics of the BUS or CPU of the system being used, so as to support the overloading resulting from the data transfer from block to block or from block to RAM.

Obviously, the problems indicated above may be present not only within the emulation subsystems described herein, but also in general in all the electronic circuits of a medium or high complexity, in which the data transfer between circuit blocks performing specific processing functions does follow methodologies similar to those highlighted here.

In addition, US 5,584,010 discloses a direct memory access control used in a multiprocessor system having a plurality of digital data processors and an external common memory connected in common to those digital data processors through a first bus. In the case of transferring data in a direct memory access mode between processors, the transfer of data between the processors is effected by the control device through a second data bus provided in common to the plurality of digital data processors separately from the first bus. Thus, data can be transferred directly in a direct memory access mode between the processors without using the external memory and high-speed transfer can be realized. In addition, the control device comprises registers for storing the status bits of each digital data processor, such as direct memory access request and acceptance signals, corresponding to each digital data processor. Request and acceptance of direct memory access and transfer of data are effected by monitoring the contents of those registers.

### Disclosure of the Invention

The aim of the present invention is a method of transferring data in an electronic circuit that allows a reduction in the load of CPU and BUS by at least 50 % as compared to the present state of the art, without a significant cost increase.

Aim of the present invention is also an electronic circuit and device, capable of reducing the overload of CPU and BUS during the data transfer from a circuit block to the RAM or from a first circuit block to another block.

This aim is attained by the method, the circuit and the device described herein, as set forth in the claims.

In particular the aim is attained by the method according to the invention whereby the CPU functions relating to the data transfer from a circuit block to the RAM or from block to block are intercepted and directly managed by electronic devices associated to the same circuit blocks.

Further, the aim is attained by the electronic circuit according to the invention in which the circuit blocks, either hardware or firmware, are associated to corresponding devices designed to directly manage the transfer from or to the RAM or from block to block without the CPU control.

By virtue of an additional characteristic of the present invention, each electronic device associated to a circuit block, in addition to easing up the load of CPU and BUS, is also designed, being programmable, to provide for instance adaptation functions of the block to the circuit and to make the same circuit block, either hardware or firmware, substantially "neutral", i.e. independent of the circuit on which the block itself is located.

### Brief Description of Drawings

This and other characteristics of the present invention will be clarified by the following description of a preferred form of embodiment, made by way of a non limiting example, by means of the attached drawings wherein:
Figure 1 shows a block diagram of an emulation subsystem, according to the state of the art;
Figure 2 illustrates a block diagram of an emulation subsystem or electronic circuit according to the present invention; and
Figure 3 depicts a block diagram of the device designed to implement the electronic circuit of Figure 2.

### Best mode for Carrying Out the Invention

With reference to Figure 2, an electronic circuit 101 according to the invention is for instance formed by an emulation subsystem of the type described in Figure 1, wherein to the hardware block 41 and to the firmware block 61 are associated a first interface device (first device) 45a and a second interface device 45b, situated between the respective blocks 41 and 61, and BUS 24, respectively.

In particular, in agreement with the present example of embodiment, the first module 14, formed for instance by the ARM INTEGRATOR/LM module, includes a programmable logic circuit of FPGA type (hardware block) 41, for instance type XC200E by XILINK Corp., and the first device 45a.

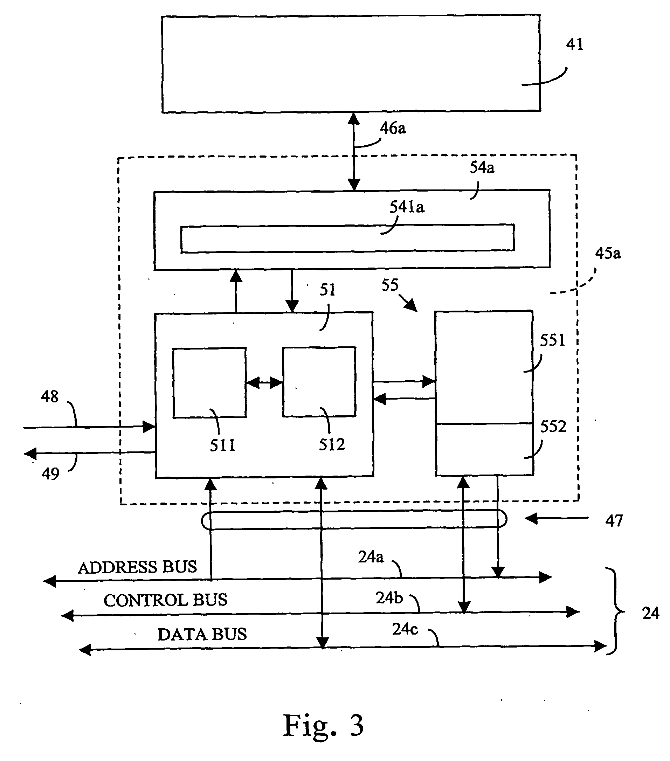

The first device 45a is connected by means of a first connection 46a to the hardware block 41, by means of a second connection 47 to BUS 24 (Figures 2 and 3), incorporating as known an ADDRESS BUS 24a, a CONTROL BUS 24b and a DATA BUS 24c, and by means of control wires 48 and 49 of a known type, for instance, for the exchange of Interrupt I/O signals with the CPU 21.

The second module 61, formed for instance by a PCI (Peripheral Component Interconnect) module of a known type, includes a DSP microprocessor (firmware block) 61, for instance TMS320C6201 by Texas Instruments Corp., and the second device 45b.

The second device 45b is connected by means of a first connection 46b to the firmware block 61, by means of a second connection 67 to the BUS 24 and by means of control wires 68 and 69 of a known type, to the CPU 21.
As will be explained in detail in the sequel, circuits 45a e 45b are designed to intercept determined control commands (commands) coming from the CPU 21 and to control the transfer of data from their respective blocks 41 and 61 to RAM 22, and vice-versa, or from the hardware block 41 to the firmware block 61, and vice-versa, without the control by CPU 21. Obviously, as is easily understood by those skilled in the art, the presence on circuit 101 of devices 45a and 45b, also requires the presence of a control circuit (BUS arbiter) 27, of a known type, designed to control the sequential access to BUS 24 by CPU 21 and devices 45a and 45b.

Device 45a e 45b only differ by specialisation features relating to the characteristics of the block to which they are associated. Structure and functions of first device 45a will be therefore described in the sequel.
Concerning the connections, as will be set forth hereinafter, connections 46a and 46b are specific and bound to the characteristics of respective blocks 41 and 61, whilst connections 47, 48 and 49 and their corresponding 67, 68 and 69 are of an equivalent type.

Device 45a comprises, for instance, a component capable of controlling the data transfer (TRANS CONTROLLER) 51, a component for controlling the memory (MEMORY CONTROLLER) 55, and a block interface component (BLOCK CONTROLLER) 54a.

The TRANS CONTROLLER 51 is connected to MEMORY CONTROLLER 55, BLOCK CONTROLLER 54a, ADDRESS BUS 24a and DATA BUS 24c, and is designed to exchange commands with CPU 21, over control wires 48 and 49, and to exchange data for instance with RAM 22 by interacting with MEMORY CONTROLLER 55, or collecting data from DATA BUS 24c, and transferring them to BLOCK CONTROLLER 54a, or vice-versa. The TRANS CONTROLLER 51 is also designed to exchange commands with CPU 21 by means of DATA BUS 24c, in order to carry out, for instance, initialisation functions or special functions defined at the design stage of electronic circuit 101 and/or device 45a, as will be described in detail later.

The TRANS CONTROLLER 51 is formed, for instance, by a state machine of a known type, capable of effecting a sequence of predefined operations in connection with predefined commands, such as Interrupt I/O signals coming from CPU 21 or a particular bit configuration present on DATA BUS 24c during the initialisation stage.

In a preferred form of embodiment, the state machine of TRANS CONTROLLER 51 comprises, for instance, a memory for storing programs (program memory) 511, and a sequencer circuit 512, both of a known type.
The program memory 511 serves, for instance, to store a plurality of instruction sequences, developed at the design stage, or defined at the configuration stage of the electronic circuit 101.
The sequencer circuit 512 is connected to the program memory 511 and is capable selectively reading and carrying out, according to predefined commands coming from CPU 21, the instruction sequences stored on the program memory 511. Obviously, the different instruction sequences may be implemented at the development or configuration stages of electronic circuit 101, and are diversified, in a preferred form of embodiment, into standard operation functions and initialisation functions.

The MEMORY CONTROLLER 55 is connected to the TRANS CONTROLLER 51, ADDRESS BUS 24a and CONTROL BUS 24b, and has the duty of requesting CONTROL BUS 24b, in a known manner, in connection with commands coming from TRANS CONTROLLER 51, to activate read or write operations from or to an address of RAM 22, or an address of an additional circuit block on ADDRESS BUS 24a, or on registers internal to MEMORY CONTROLLER 55 itself.
For general use purposes, MEMORY CONTROLLER 55 comprises, for instance, a MEMORY CONTROLLER GENERIC 551, capable of generating a generic request function towards CONTROL BUS 24b, and an adaptation unit or MEMORY CONTROLLER SPECIFIC 552, capable of specialising the requests to CONTROL BUS 24b as a function of the type of CONTROL BUS being used on the electronic circuit 101.

The MEMORY CONTROLLER 55 may be implemented for instance by using a discrete logic of a known type, or also, through synthesis, starting from a memory controller belonging to a library of components of said type and it will preferably incorporate some registers to store addresses of RAM 22 to be used for reading or writing data or addresses of additional circuit blocks for a direct transfer of data.
Obviously, said addresses may be defined at the configuration stage of device 45a, as a function of the characteristics of the associated block 41, or predefined at the design stage of the electronic circuit 101.

The BLOCK CONTROLLER 54a is connected to the hardware block 41 and to the TRANS CONTROLLER 51 and is designed to control hardware block 41, on the basis of the commands coming from the TRANS CONTROLLER 51, in order that the specific functions of the hardware block 41 are carried out.

The BLOCK CONTROLLER 54a has also the duty, upon completion of the specific functions by hardware block 41, of informing TRANS CONTROLLER 51 about the completion of said functions by the same block 41.

The BLOCK CONTROLLER 54a preferably comprises an I/O BUFFER 541a, of a known type, for storing, in accordance with the present example of embodiment, data to be exchanged between hardware block 41 and RAM 22, or another block.
In particular, I/O BUFFER 541a serves for instance to alternatively store either data at the input of block 41 at the time of activation of the same block, or data at the output of block 41 upon completion of the functions of the same block.

The BLOCK CONTROLLER 54a of the interface device 45a and the BLOCK CONTROLLER of the interface device 45b are specialised on the block to which they are associated, since the activation characteristics of respective blocks (41 and 61) and the size of the data to be exchanged for each block are generally diversified from block to block thus, devices 45a and 45b differ, in accordance with the present example of embodiment, only by the characteristics of respective BLOCK CONTROLLERs, which, as described before, depend in turn on the characteristics of blocks 41 and 61 to which they are interfaced.

The BLOCK CONTROLLERS may be implemented for instance through elementary logic circuits or also through state machines having predefined functions in relation to commands coming from the associated TRANS CONTROLLER or respective block 41 or 61.

Preferably, at the initialisation stage of electronic circuit 101, the BLOCK CONTROLLERS are designed to be programmed by CPU 21 by means of the associated TRANS CONTROLLER. Therefore by virtue of said characteristic they are able to allow the adaptation of the characteristics of respective blocks to those of the electronic circuit on which they are placed.

By virtue of the described architecture and in agreement with the present invention, device 45a associated to hardware block 41 and device 45b associated to firmware block 61 are able to activate and perform the data transfer from RAM 22 to respective blocks (41 and 61), and vice-versa, by greatly reducing the load of CPU 21 and BUS 24.

Let us consider as an example the data transfer from the hardware block 41 to the RAM 22.
In connection with the signalling by BLOCK CONTROLLER 54b of the completion of the functions of hardware block 41, TRANS CONTROLLER 51 sends the request - without requiring CPU 21 to intervene - to MEMORY CONTROLLER 55 to activate the writing on RAM 22 of content of I/O BUFFER 541a to the addresses indicated on the registers inside MEMORY CONTROLLER 55. Following the activation of write commands, the TRANS CONTROLLER 51 transfers the content of I/O BUFFER 541a to the RAM 22, and when said transfer has ended, it sends CPU 21 over wire 49 an. Interrupt I/O signal to inform of transfer completion.

As will be easily appreciated by those skilled in the art, thanks to the present invention the data transfer from hardware block 41 to RAM 22 does not require the intervention of CPU 21 and occupies BUS 24 only once; thus allowing, all conditions being equal, a reduction of CPU 21 load and by 50 % of BUS 24 occupation, as compared to the state of the art.

For the sake of completeness, the description also includes an example relating to the determination of the addresses of RAM 22 on which the data are to be stored.
Said operation may be carried out at a initialisation or start up stage of the electronic circuit 101 by envisaging for instance that over DATA BUS 24c during said stage 51 a predefined command of initialisation is presented to the TRANS CONTROLLER 51 by the CPU 21 and that upon this instruction the TRANS CONTROLLER 51 reads from the ADDRESS BUS 24c the addresses of RAM 22 to be used for read and write operations by the associated block and stores them into the registers internal to the MEMORY CONTROLLER 55.

The operation of electronic circuit 101 described so far is the following.

At the initialisation step, the CPU 21 configures all the devices present on the electronic circuit, for instance devices 45a and 45b, by sending specific commands to each device, 45a or 45b, and presenting on the ADDRESS BUS 24a the addresses of RAM 22 or of the blocks which each device must use at the write and read phases for exchanging data in operation.

During the operation phases, for instance, data reading from RAM 22, the CPU 21 notifies, by means of Interrupt I/O signals, to devices 45a or 45b that the data are available for reading, in order that devices 45a or 45b may collect the data from RAM 22, at the address defined at the initialisation stage, and make them available to the respective blocks 41 and 61, without any additional intervention by CPU 21.
During the writing of data on RAM 22, for instance, the devices 45a or 45b engage BUS 24 and directly transfer the data from respective blocks 41 or 61 to RAM 22 to the addresses assigned at the initialisation stage, and only upon transfer completion they notify, by means of Interrupt I/O signals, the end of the write operation to CPU 21.

Thanks to devices 45a and 45b, write and read operations from and to RAM 22 are performed in such a way that
- CPU 21 only carries out the control functions of electronic circuit 101 and does not look, for instance, to the specific function of data transfer in the transmission chain;
- BUS 24 is not engaged by CPU 21 during the data transfer operations; as a matter of fact, CPU 21 only acts on the basis of Interrupt I/O signals, and uses BUS 24 only in the event of initialisation commands or in the event of specific control commands, such as, for instance, the emptying of the output buffer of block 41 or 61, without extracting data from RAM 22, etc.

In case of direct data transfer from a first block to a second circuit block, the configuration of electronic circuit 101 is such that devices associated to the blocks contain write and read addresses corresponding to the devices on which the read and write operations must be performed.
In this form of implementation, for instance, at the initialisation stage CPU 21 sends to device 45a the address of the I/O BUFFER of device 45b, for its storing on the internal registers of the MEMORY CONTROLLER 55. During the operation phases, in connection with Interrupt I/O signals coming from CPU 21, device 45a activates hardware block 41 for carrying out the defined functions, and upon completion of said functions, it directly transfers the processed data to device 45b; only at the end of said transfer, in accordance with such form of embodiment, device 45a informs, through Interrupt I/O signals, CPU 21 of the end of block 41 activity and of the transfer.
As will become evident to those skilled in the art, this form of embodiment reduces the occupation of BUS 24 and CPU 21 by more than 50 %, as compared to the existing state of the art.

The description has been effected making reference to a first device 41a, associated to a hardware block 41, and to a second device 41b, associated to a firmware block 61, and the data exchange between said blocks, but it will become evident to those skilled in the art that the characteristics of the invention remain unchanged in the case in which the devices are associated to homogeneous blocks, for instance, all of hardware type or firmware type, and the data exchange takes place between homogeneous blocks.

Devices 45a e 45b have been described as separate from their respective circuit blocks 41 and 61 to which they are associated. As will be clear to those skilled in the art, device 45a may be for instance implemented by synthesis and integrated into hardware block 41, being formed, as already described, by circuit elements the models of which may be easily retrieved from a library of components.

Likewise, device 45b, associated to firmware block 61, may be implemented in the form of a firmware performing the logic architecture of the described device, provided that, as will become evident to those skilled in the art, the microprocessor or DSP used as firmware block is capable of being directly connected to BUS 24 and to control wires 68 and 69.

The present description has been made by associating a respective device to each circuit block, but as will be clear to those skilled in the art, said condition is strictly required only to guarantee that each block may directly transfer data to other blocks, without increasing the CPU and BUS load.

Obvious modifications or variations are possible to the above description, concerning size, dimensions, forms, materials, components, circuit elements, connections and contacts, as well as details of the circuitry and implementation presented herein, and of the method of operation, without departing from the scope of the invention, as defined by the appended claims.

## Claims

1. Method of transferring data in an electronic circuit (101) comprising a control unit (21), a first circuit block (41), capable of performing first processing functions, and a second circuit block (61) capable of performing second processing functions, **characterised by** configuring said electronic circuit (101) by means of specific commands issued by said control unit (21) at an initialization step and **characterised by** further including the following steps:
- intercepting by means of a first interface device (45a) associated to said first circuit block (41) said specific commands issued by said control unit (21);
- using said intercepted specific commands for activating said first circuit block (41) for performing said first processing functions and generating processed data;
- using said specific commands for transferring in a direct manner from said first circuit block (41) to said second circuit block (61) the processed data through transferring,under the control of said first interface device (45a), said processed data from an I/O buffer device comprised in said first interface device (45a) to an I/O buffer device comprised in a second interface device (45b) associated to said second circuit block.

2. Method according to claim 1, **characterised by** the step of:
- using a bus (24) connected to said control unit (21) for said transferring of said processed data from the I/O buffer device comprised in said first interface device (45a) to the I/O buffer device comprised in said second interface device (45b).

3. Method according to claims 1 or 2, **characterised by** the additional step of:
- transmitting by said first interface device (45a) to said control unit (21) upon completion of the transfer of said processed data, signals (I/O) indicative of said completion.

4. Electronic circuit comprising:
- a control unit (21);
- a first circuit block (41) capable of performing first processing functions; and
- a second circuit block (61) capable of performing second processing functions **characterised in that**:
- said control unit (21) is adapted to generate, at an initialisation step, specific commands for configuring said electronic circuit (101);
- a first and a second interface device (45a, 45b) associated to said first and respectively second circuit block (41, 61), each of said first and second interface devices (45a, 45b) comprising a respective I/O buffer device, said first interface device (45a) being capable of:
- intercepting said specific commands issued by said control unit (21),
- using said intercepted specific commands for activating said first circuit block (41) to generate processed data to be transferred to said second circuit block (61), and
- using said specific commands for transferring in a direct manner the processed data from said first circuit block (41) to said second circuit block (61) through transferring said processed data from the I/O buffer device comprised in said first interface device (45a) to the I/O buffer device comprised in said second interface device (45b).

5. Electronic circuit according to claim 4, **characterised in that** it comprises a bus (24) connected to said control unit (21) for said transferring of said processed data from the I/O buffer device comprised in said first interface device (45a) to the I/O buffer device comprised in said second interface device (45b).

6. Electronic circuit according to claim 4, **characterised in that** said first interface device (45a) comprises:
- a controller (51) capable of managing said specific commands issued by said control unit (21) by activating instruction sequences defined on the basis of said specific commands.

7. Electronic circuit according to claim 6, **characterised in that** said controller (51) comprises:
- a memory unit (511) capable of storing a plurality of instruction sequences selectively actionable.

8. Electronic circuit according to any of claims 5 to 7, **characterised in that** said interface devices (45a) comprises:
- a memory control unit (55) capable of controlling the data transfer from said first interface device (45a) to predefined addresses associated to the I/O buffer device comprised in said second interface device (45b).

9. Electronic circuit according to claim 8, **characterised in that** said memory control unit (55) comprises:
- a memory controller unit (551) capable of generating a generic request function towards a control portion of said bus (24), and
- an adaptation unit (552) capable of specialising said generic request as a function of the type of said control portion of said bus (24).

10. Electronic circuit according to any of claims 4 to 9, **characterised in that** said first interface device (45a) comprises:
- a first block interface unit (54a) capable of activating said first circuit block (41) to carry out said first processing functions.

11. Electronic circuit according to claim 6 and 10, **characterised in that** said first block interface unit (54a) is adapted to be programmed by control unit (21) through said controller (51)

12. Electronic circuit according to claim 10 or 11, **characterised in that** said I/O buffer device comprised in said first interface device (45a) is included in said first block interface unit (54a).

13. Electronic circuit according to any of claims 4 to 12, **characterised by** the fact of being an emulation subsystem for emulating data transmission chains among a plurality of circuit blocks (41, 61).

14. Electronic circuit according to claim 13, **characterised in that** said circuit blocks comprise circuit blocks of hardware type (41) and/or circuit blocks of firmware type (61).

## Patentansprüche

1. Verfahren zum Übertragen von Daten in einer elektronischen Schaltung (101) mit einer Steuereinheit (21), einem ersten Schaltungsblock (41), der erste Verarbeitungsfunktionen durchführen kann, und einem zweiten Schaltungsblock (61), der zweite Verarbeitungsfunktionen durchführen kann, **gekennzeichnet durch** ein Konfigurieren der elektronischen Schaltung (101) mittels bestimmter **durch** die Steuereinheit (21) in einem Initialisierungsschritt erteilter Befehle und weiterhin **gekennzeichnet durch** die folgenden Schritte:
- Abfangen der bestimmten **durch** die Steuereinheit (21) erteilten Befehle mittels einer mit dem ersten Schaltungsblock (41) verbundenen ersten Schnittstelleneinrichtung (45a);
- Verwenden der abgefangenen bestimmten Befehle zur Aktivierung des ersten Schaltungsblocks (41) zum Durchführen der ersten Verarbeitungsfunktionen und zum Erzeugen verarbeiteter Daten;
- Verwenden der bestimmten Befehle zum direkten Übertragen der verarbeiteten Daten von dem ersten Schaltungsblock (41) in den zweiten Schaltungsblock (61) **durch** Übertragen der verarbeiteten Daten unter der Steuerung der ersten Schnittstelleneinrichtung (45a) von einer in der ersten Schnittstelleneinrichtung (45a) enthaltenen Eingabe/Ausgabe (I/O)-Pufferspeichereinrichtung zu einer in einer zweiten, mit dem zweiten Schaltungsblock verbundenen Schnittstelleneinrichtung (45b) enthaltenen Eingabe/Ausgabe-Pufferspeichereinrichtung.

2. Verfahren nach Anspruch 1, **gekennzeichnet durch** den Schritt:
Verwenden eines mit der Steuereinheit (21) verbundenen Busses zur Übertragung der verarbeiteten Daten von der in der ersten Schnittstelleneinrichtung (45a) enthaltenen Eingabe/Ausgabe-Pufferspeichereinrichtung zur in der zweiten Schnittstelleneinrichtung (45b) enthaltenen Eingabe/Ausgabe-Pufferspeichereinrichtung.

3. Verfahren nach Anspruch 1 oder 2, **gekennzeichnet durch** den zusätzlichen Schritt:
bei Beendigung der Übertragung der verarbeiteten Daten Übertragen von die Beendigung anzeigenden Signalen (I/O) **durch** die ersten Schnittstelleneinrichtung (45a) zur Steuereinheit (21).

4. Elektronische Schaltung mit:
- einer Steuereinheit (21);
- einem ersten Schaltungsblock (41) zur Durchführung erster Verarbeitungsfunktionen; und
- einem zweiten Schaltungsblock (61) zur Durchführung zweiter Verarbeitungsfunktionen,
**dadurch gekennzeichnet, daß**
- die Steuereinheit (21) so ausgelegt ist, daß sie in einem Initialisierungsschritt bestimmte Befehle zur Konfiguration der elektronischen Schaltung (101) erzeugen kann;
- eine erste und eine zweite Schnittstelleneinrichtung (45a, 45b) mit dem ersten bzw. zweiten Schaltungsblock (41, 61) jeder der ersten und zweiten, eine jeweilige Eingabe/Ausgabe-Pufferspeichereinrichtung enthaltenden Schnittstelleneinrichtungen (45a, 45b) verbunden sind, wobei die erste Schnittstelleneinrichtung (45a) in der Lage ist:
- die bestimmten durch die Steuereinheit (21) erteilten Befehle abzufangen,
- die abgefangenen bestimmten Befehle zur Aktivierung des ersten Schaltungsblocks (41) zur Erzeugung verarbeiteter, zum zweiten Schaltungsblock (61) zu übertragender Daten zu verwenden und
- die bestimmten Befehle zur direkten Übertragung der verarbeiteten Daten von dem ersten Schaltungsblock (41) zum zweiten Schaltungsblock (61) durch Übertragen der verarbeiteten Daten von der in der ersten Schnittstelleneinrichtung (45a) enthaltenen Eingabe/Ausgabe-Pufferspeichereinrichtung zur in der zweiten Schnittstellenrichtung (45b) enthaltenen Eingabe/Ausgabe-Pufferspeichereinrichtung übertragen werden, verwenden.

5. Elektronische Schaltung nach Anspruch 4, **dadurch gekennzeichnet, daß** sie eine mit der Steuereinheit (21) verbundenen Bus zur Übertragung der verarbeiteten Daten von der in der ersten Schnittstelleneinrichtung (45a) enthaltenen Eingabe/Ausgabe-Pufferspeichereinrichtung zu der in der zweiten Schnittstelleneinrichtung (45b) enthaltenen Eingabe/Ausgabe-Pufferspeichereinrichtung aufweist.

6. Elektronische Schaltung nach Anspruch 4, **dadurch gekennzeichnet, daß** die erste Schnittstelleneinrichtung (45a) eine Steuereinrichtung (51) zur Verwaltung der bestimmten durch die Steuereinheit (21) erteilten bestimmten Befehle durch Aktivierung von auf der Grundlage der bestimmten Befehle definierten Anweisungsabfolgen aufweist.

7. Elektronische Schaltung nach Anspruch 6, **dadurch gekennzeichnet, daß** die Steuereinrichtung (51) eine Speichereinheit (511) zur Speicherung einer Vielzahl von selektiv aktivierbaren Anweisungsabfolgen aufweist.

8. Elektronische Schaltung nach einem der Ansprüche 5 bis 7, **dadurch gekennzeichnet, daß** die Schnittstelleneinrichtung (45a) eine Speichersteuereinrichtung (55) zur Steuerung der Datenübertragung von der ersten Schnittstelleneinrichtung (45a) zu vordefinierten, zu der in der zweiten Schnittstelleneinrichtung (45b) enthaltenen Eingabe/Ausgabe-Pufferspeichereinrichtung gehörigen Adressen aufweist.

9. Elektronische Schaltung nach Anspruch 8, **dadurch gekennzeichnet, daß** die Speichersteuereinrichtung (55) aufweist:
- eine Speichersteuereinheit (551) zur Erzeugung einer allgemeinen Anforderungsfunktion an einen Steuerteil des Busses (24) und
- eine Anpassungseinheit (552) zur Spezialisierung der allgemeinen Anforderung als eine Funktion der Art des Steuerteils des Busses (24).

10. Elektronische Schaltung nach einem der Ansprüche 4 bis 9, **dadurch gekennzeichnet, daß** die erste Schnittstelleneinrichtung (45a) eine erste Blockschnittstelleneinheit (54a) zur Aktivierung des ersten Schaltungsblocks (41) zur Ausführung der ersten Verarbeitungsfunktionen aufweist.

11. Elektronische Schaltung nach Anspruch 6 und 10, **dadurch gekennzeichnet, daß** die erste Blockschnittstelleneinheit (54a) so ausgelegt ist, daß sie durch die Steuereinheit (21) durch die Steuereinheit (51) programmiert werden kann.

12. Elektronische Schaltung nach Anspruch 10 oder 11, **dadurch gekennzeichnet, daß** die in der ersten Schnittstelleneinrichtung (45a) enthaltene Eingabe/Ausgabe-Pufferspeichereinrichtung in der ersten Blockschnittstelleneinheit (54a) enthalten ist.

13. Elektronische Schaltung nach einem der Ansprüche 4 bis 12, **gekennzeichnet durch** die Tatsache, dass sie ein Emulations-Untersystem zur Emulation von Datenübertragungsketten unter einer Vielzahl von Schaltungsblöcken (41, 61) ist.

14. Elektronische Schaltung nach Anspruch 13, **dadurch gekennzeichnet, daß** die Schaltungsblöcke Schaltungsblöcke vom Hardware-Typ (41) und/oder Schaltungsblöcke vom Firmware-Typ (61) aufweisen.

## Revendications

1. Procédé de transfert de données dans un circuit électronique (101) comportant une unité de commande (21), un premier bloc de circuit (41), capable d'exécuter des premières fonctions de traitement, et un second bloc de circuit (61) capable d'exécuter des secondes fonctions de traitement, **caractérisé par** la configuration dudit circuit électronique (101) par l'intermédiaire d'instructions spécifiques délivrées par ladite unité de commande (21) lors d'une étape d'initialisation et **caractérisé en outre par** les étapes suivantes consistant à :
- intercepter par l'intermédiaire d'un premier dispositif d'interface (45a) associé audit premier bloc de circuit (41) lesdites instructions spécifiques délivrées par ladite unité de commande (21),
- utiliser lesdites instructions spécifiques interceptées pour activer ledit premier bloc de circuit (41) afin d'exécuter lesdites premières fonctions de traitement et de générer des données traitées,
- utiliser lesdites instructions spécifiques pour transférer d'une manière directe depuis ledit premier bloc de circuit (41) vers ledit second bloc de circuit (61) les données traitées via le transfert, sous la commande dudit premier dispositif d'interface (45a), desdites données traitées depuis un dispositif tampon E/S compris dans ledit premier dispositif d'interface (45a) vers un dispositif tampon E/S compris dans un second dispositif d'interface (45b) associé audit second bloc de circuit.

2. Procédé selon la revendication 1, **caractérisé par** l'étape consistant à :
- utiliser un bus (24) connecté à ladite unité de commande (21) pour ledit transfert desdites données traitées depuis le dispositif tampon E/S compris dans ledit premier dispositif d'interface (45a) vers le dispositif tampon E/S compris dans ledit second dispositif d'interface (45b).

3. Procédé selon les revendications 1 ou 2, **caractérisé par** l'étape supplémentaire consistant à :
- transmettre par l'intermédiaire dudit premier dispositif d'interface (45a) à ladite unité de commande (21) lors de l'exécution du transfert desdites données traitées, des signaux (E/S) indicatifs de ladite exécution.

4. Circuit électronique comportant :
- une unité de commande (21),
- un premier bloc de circuit (41) capable d'exécuter des premières fonctions de traitement, et
- un second bloc de circuit (61) capable d'exécuter des secondes fonctions de traitement **caractérisé en ce que** :
- ladite unité de commande (21) est adaptée pour générer, lors d'une étape d'initialisation, des instructions spécifiques pour configurer ledit circuit électronique (101),
- un premier et un second dispositifs d'interface (45a, 45b) associés respectivement auxdits premier et second blocs de circuit (41, 61), chacun desdits premier et second dispositifs d'interface (45a, 45b) comportant un dispositif tampon E/S respectif, ledit premier dispositif d'interface (45a) étant capable :
- d'intercepter lesdites instructions spécifiques délivrées par ladite unité de commande (21),
- d'utiliser lesdites instructions spécifiques interceptées pour activer ledit premier bloc de circuit (41) afin de générer des données traitées à transférer audit second bloc de circuit (61), et
- d'utiliser lesdites instructions spécifiques pour transférer d'une manière directe les données traitées depuis ledit premier bloc de circuit (41) vers ledit second bloc de circuit (61) via le transfert desdites données traitées depuis le dispositif tampon E/S compris dans ledit premier dispositif d'interface (45a) vers le dispositif tampon E/S compris dans ledit second dispositif d'interface (45b).

5. Circuit électronique selon la revendication 4, **caractérisé en ce qu'**il comporte un bus (24) connecté à ladite unité de commande (21) pour ledit transfert desdites données traitées depuis le dispositif tampon E/S compris dans ledit premier dispositif d'interface (45a) vers le dispositif tampon E/S compris dans ledit second dispositif d'interface (45b).

6. Circuit électronique selon la revendication 4, **caractérisé en ce que** ledit premier dispositif d'interface (45a) comporte :
- un contrôleur (51) capable de gérer lesdites instructions spécifiques délivrées par ladite unité de commande (21) en activant des séquences d'instruction définies sur la base desdites instructions spécifiques.

7. Circuit électronique selon la revendication 6, **caractérisé en ce que** ledit contrôleur (51) comporte :
- une unité de mémoire (511) capable de mémoriser une pluralité de séquences d'instruction pouvant être actionnées de manière sélective.

8. Circuit électronique selon l'une quelconque des revendications 5 à 7, **caractérisé en ce que** ledit dispositif d'interface (45a) comporte :
- une unité de commande de mémoire (55) capable de commander le transfert de données depuis ledit premier dispositif d'interface (45a) vers des adresses prédéfinies associées au dispositif tampon E/S compris dans ledit second dispositif d'interface (45b).

9. Circuit électronique selon la revendication 8, **caractérisé en ce que** ladite unité de commande de mémoire (55) comporte :
- une unité de contrôleur de mémoire (551) capable de générer une fonction de demande générique à destination d'une partie de commande dudit bus (24), et
- une unité d'adaptation (552) capable de spécialiser ladite demande générique en tant que fonction du type de ladite partie de commande dudit bus (24).

10. Circuit électronique selon l'une quelconque des revendications 4 à 9, **caractérisé en ce que** ledit premier dispositif d'interface (45a) comporte :
- une première unité d'interface de bloc (54a) capable d'activer ledit premier circuit de bloc (41) pour exécuter lesdites premières fonctions de traitement.

11. Circuit électronique selon les revendications 6 et 10, **caractérisé en ce que** ladite première unité d'interface de bloc (54a) est adaptée pour être programmée par l'unité de commande (21) via ledit contrôleur (51).

12. Circuit électronique selon la revendication 10 ou 11, **caractérisé en ce que** ledit dispositif tampon E/S compris dans ledit premier dispositif d'interface (45a) est inclus dans ladite première unité d'interface de bloc (54a).

13. Circuit électronique selon l'une quelconque des revendications 4 à 12, **caractérisé par** le fait d'être un sous-système d'émulation pour émuler des chaînes de transmission de données entre une pluralité de blocs de circuit (41, 61).

14. Circuit électronique selon la revendication 13, **caractérisé en ce que** lesdits blocs de circuit comportent des blocs de circuit de type matériel (41) et/ou des blocs de circuit de type micrologiciel (61).
